# EUROPEAN PATENT SPECIFICATION

(11) **EP 2 232 810 B1**
(45) Date of publication and mention of the grant of the patent: **18.12.2013**
(21) Application number: 09700606.8
(22) Date of filing: 08.01.2009
(51) Int. Cl.: H04L 29/06, H04L 12/46

(54) **AUTOMATIC PROXY DETECTION AND TRAVERSAL**
AUTOMATISCHE PROXY-ERKENNUNG UND DURCHLAUF
DÉTECTION ET TRAVERSÉE DE SERVEUR MANDATAIRE AUTOMATIQUES

(30) Priority: 08.01.2008 GB 0800268; 11.01.2008 US 20657 P
(43) Date of publication of application: 29.09.2010
(73) Proprietor: Scansafe Limited, Cardiff CF10 5BT (GB)
(72) Inventor: EDWARDS, John, London W1T 4EZ (GB)
(74) Representative: Kazi, Ilya
(86) International application number: PCT/GB2009/000042
(87) International publication number: WO 2009/087382

(56) References cited:
- WO-A-02/056175
- US-A1- 2003 217 173
- US-B1- 6 857 009
- INTERNATIONAL BUSINESS MACHINES CORPORATION: "Dynamic discovery of web proxy services" RESEARCH DISCLOSURE, MASON PUBLICATIONS, HAMPSHIRE, GB, vol. 458, no. 186, 1 June 2002 (2002-06-01), XP007130717 ISSN: 0374-4353

## Description

### Field of the Invention

The present invention relates proxy detection and traversal, including methods for detecting automatically a proxy and, preferably, creating a tunnel for network communications via the proxy. Potential applications that might benefit from methods according to the invention include, but are not limited to, network communication applications such as VPNs and Managed VPN solutions.

### Background

It is becoming increasingly common for people to work away from their business premises (e.g. at home, at a customer's premises, in hotels when travelling and at other alternate locations). In many cases, such roaming users will be accessing corporate resources remotely over a public network (e.g. the Internet) via a secure connection, e.g. a VPN.

VPN client applications, Managed VPN solutions and other network communication software often make use of Tunneling Protocols. There are many reasons to tunnel, including carrying a payload over an incompatible delivery network, or (especially in the case of VPN applications) to provide a secure path through an untrusted network, such as the Internet or other public networks.

Tunneling can also be used to traverse a firewall (firewall policy permitting). In this case, protocols that are normally blocked by the firewall are encapsulated inside a commonly allowed protocol such as HTTP. If the policy on the firewall does not exercise enough control over HTTP requests, this can sometimes be used to circumvent the intended firewall policy.

Another HTTP-based tunneling method uses the HTTP CONNECT method/command. This command tells an HTTP proxy to make a TCP connection to the specified server:port, and relay data back and forth between that connection and the client connection. Therefore, for security reasons, CONNECT-capable HTTP proxies commonly restrict access to the CONNECT method to accessing TLS/SSL-based HTTPS services only.

HTTP Tunnel is used most often as a means for communication from network locations with restricted connectivity - most often behind NATs, firewalls, or proxy servers, and most often with applications that lack native support for communication in such conditions of restricted connectivity. Restricted connectivity in the form of blocked TCP/IP ports, blocking traffic initiated from outside the network, or blocking of all network protocols except a few is a commonly used method to lockdown a network to secure it against internal and external threats.

A problem with using HTTP tunneling is that the HTTP protocols may actually egress from a network in one of three ways:
- direct
- transparent proxying
- explicit proxying

The first two require no configuration - the client tunnel endpoint simply makes a connection using the default settings from the installed machine. The tunneled connection then either proceeds directly to the tunnel endpoint, or else is transparently redirected.

The third is more complex, because there is no standard way for the client tunnel endpoint to determine proxy details. This is especially difficult if the client software is operating at the network stack level.

The Client Software (e.g. VPN software) could interrogate the operating system for "well known" locations for proxy settings (e.g. looking at Internet Explorer configurations) but this is not guaranteed to detect the settings. Also, the use of WPAD (which is increasingly common) provides a loosely defined mechanism for determining proxy settings from a range of different sources, making the detection of proxy settings even more troublesome.

US 2003/0217173 describes an approach to automatically detecting a proxy by storing and comparing copies of connection tables from an Internet Web browser. Whilst this approach can be used to discover proxies where WPAD is used its application is limited as it requires,code-level integration with a pre-installed web browser.

Patent application published as WO 02/056175 A2 discloses a method of traversing a firewall by a client device by sniffing packets in a common LAN bus being sent by other client devices and inspecting their content to detect communications likely to go through a proxy. Then, the settings of the proxied communications are used to traverse the firewall. However, this solution is not applicable for standalone client devices.

In summary, there is no reliable, easily implemented mechanism for an HTTP tunnel client (such as an SSL VPN client) to determine upstream proxy settings.

### Summary of the Invention

It is a general aim of embodiments of the present invention to provide a method for detecting automatically the existence of a proxy without requiring user intervention and without direct integration with web browsers,

It is a general aim of some embodiments of the present invention to create a tunnel via a proxy that has been detected automatically without requiring user intervention and without direct integration with web browsers.

It is a general aim of some embodiments of the present invention to intercept proxy authentication credentials and reuse these in the creation of the tunnel.

It is a general aim of some embodiments of the present invention to intercept web traffic from a browser and to tunnel it to a managed network (e.g. web) service, for instance a managed web security service. In some embodiments this is achieved irrespective of the configuration of the web browser, in particular whether or not the web browser is configured to use a proxy, irrespective of how any proxy is configured (e.g. explicit, PAC or other WPAD setting) and whether or not proxy authentication is in use.

Various aspects of the invention are set out in the claims below.

### Brief description of the Drawings

Figure 1 shows an exemplary system in which embodiments of the present invention might be deployed; and
Figure 2 illustrates a process, in accordance with an embodiment of the present invention, for creating a tunnel from a client computer via a proxy to another computer (e.g. a corporate server or a server hosting a managed network service).

### Detailed Description

In one aspect the invention provides a method for detecting a proxy, the method comprising:
inspecting one or more network communications being sent from a client computer; and
determining from information contained in the network communication whether the network communication is being sent via a proxy.

Since network communications can be relatively easily intercepted and inspected, e.g. by an application on the client computer, this approach can provide a convenient mechanism for determining the existence of a proxy without user intervention and without requiring direct integration with web browsers.

Preferably the method further comprises capturing proxy information from the network communication for subsequent use by a network communication application, e.g. a VPN application. For instance, the proxy information can be used to create a tunnel from the client via the proxy.

In cases where proxy authentication credentials are required to access the proxy, the method preferably also includes intercepting proxy authentication credentials and subsequently reusing them, for example to create and, if needs be maintain, a tunnel from the client via the proxy.

The method is preferably implemented by an application executed on the client computer.

The client computer may be any of a number of suitable types of digital processing device that can be connected to a shared public network, including (for example) general purpose computers such as desktop PCs, laptop PCs, tablet PCs and handheld PCs, personal digital assistants (PDAs), portable telephones (e.g. cellular telephones and satellite telephones) and games consoles.

In another aspect, the invention provides a client computer having an application installed thereon operable to implement the method set forth above.

The invention also provides software code for implementing the method set forth above when installed on a client computer.

Embodiments of the invention, including the embodiment described below, can be used to:
1) Automatically detect the existence of a proxy without requiring user intervention and without direct integration with known web browsers.
2) Automatically create a tunnel via the proxy.
3) Automatically intercept proxy authentication credentials and reuse these in the creation of the tunnel.

The invention works by "listening" to all network traffic egressing the client, or to a subset of well known ports. This listening may be achieved using a kernel mode driver, operating at the Protocol Stack or Network Driver level.

The invention detects the "signature" of proxied traffic and uses this to infer the local address of the proxy. It can then create the relevant tunnel dynamically and connect directly to the proxy. This has the advantage of:
- not requiring application specific configuration
- picking up proxy changes dynamically including those configured via WPAD.

In the case of http, the traffic is recognized by scanning all network traffic for the standard HTTP request line (see RFC 2616: *Hypertext Transfer Protocol - HTTP*/*1.1; R. Fielding et al; 1999 at 5.1* - http:flwww.w3. org/Protocols/rfc2616/rfc2616-sec5.html#sec5.1) e.g. Request-Line = Method SP Request-URI SP HTTP-Version CRLF

When that line is recognised a further match is done to determine whether a proxy is in use (Using this rule from the RFC (RFC 2616 at 5.1.2): "The absoluteURI form is REQUIRED when the request is being made to a proxy").

If so, then the original destination of the connection is interrogated and the client can then create a tunnel (e.g. using SSL over port 443) via the proxy, to an alternative endpoint address.

In the case where credentials are required to access the proxy, the invention will behave as a "man-in-the-middle" and relay the authentication credentials back and forth in order to create and maintain the tunnel.

The invention has the advantage that it can be used to vary the tunnel dynamically per connection if required. It may also choose to cache the tunnel once created and reuse it for subsequent connections with the same proxy profile, thereby reducing latency and connection overhead.

One particular, exemplary use for the invention is to transparently intercept web traffic from a web browser and to tunnel it to a managed web security service - the proxy traversal aspects of the invention allow this to be achieved whether or not the web browser is configured to use a proxy, how the proxy is configured (explicit, PAC or other WPAD setting) and whether or not proxy authentication is in use.

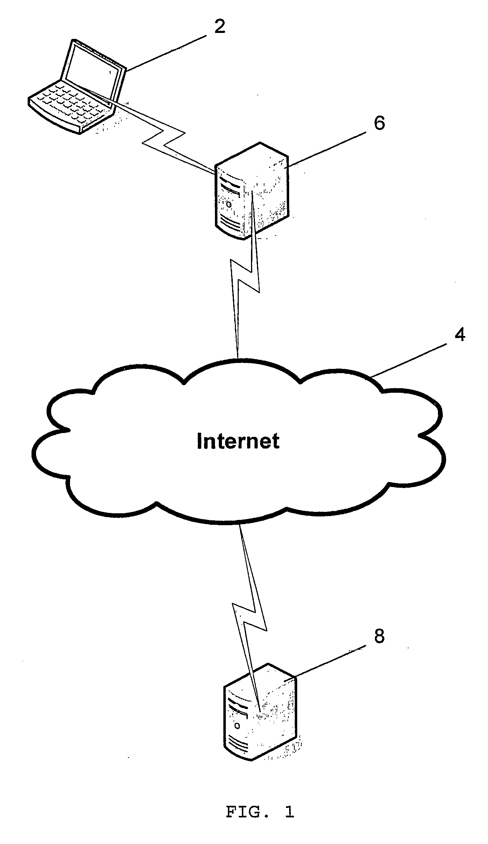

Fig. 1 shows an exemplary network arrangement in which an embodiment of the invention might usefully be deployed. In this network a client computer 2 is connected to the Internet 4 (or other public or otherwise 'entrusted' network) via a proxy server 6. By installing on the client 2 an application that can execute a method in accordance with an embodiment of the invention, it becomes possible to reliably and transparently detect the presence of a proxy (e.g. 6), capture proxy information, potentially including proxy authentication credentials, and to subsequently use this information to create a tunnel from the client 2 to another computer 8 (e.g. a corporate server behind a firewall or a server hosting a managed network service) via the proxy 6.

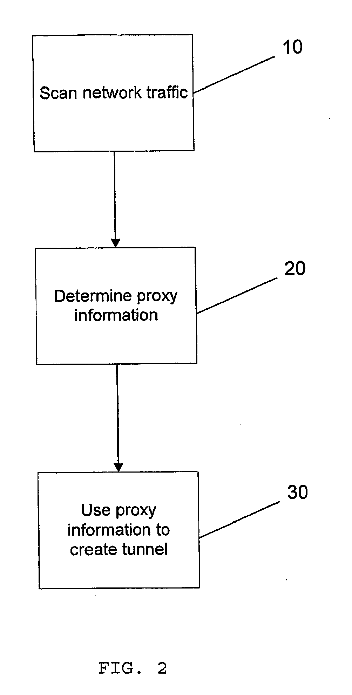

Fig. 2 illustrates the process by which a tunnel can be created between the client 2 and other computer 8. First, an application executing on the client 2 'listens' (i.e. scans) all or a subset of network traffic egressing the client 2 (block 10). By inspecting this traffic, the local address of the proxy (and possible other proxy information, e.g. proxy authentication credentials) are determined (block 20). The local proxy address, and if needs be other proxy information, thus determined is then used to create a tunnel from the client 2 to the other computer 8 via the proxy 6 (block 30).

Various modifications to the specifically described embodiment are possible within the scope of the invention. For instance, although the invention has been illustrated in the context of HTTP traffic, the methods are applicable to any type of proxied traffic, so long as:
i) the traffic type can be (preferably reliably) identified at the network level; and
ii) proxied traffic is (preferably readily) distinguishable from non-proxied traffic.

## Claims

1. A method, at a client computer (2), for creating a tunnel for network communications between the client and a server (8) over a network (4), the method comprising:
inspecting (10) one or more network communications being sent from the client computer (2);
determining (20) from information contained in the network communication whether the network communication is being sent via a proxy (6);
if the network communication is being sent via proxy (6), capturing proxy information from the network communication; and
using (30) the captured proxy information to create the tunnel from the client (2) via the proxy (6).

2. A method according to claim 1, further comprising capturing proxy authentication credentials from a network message and using the captured proxy authentication credentials in the creation of a tunnel from the client (2) via the proxy (6).

3. A client computer (2) comprising:
a processor; a network interface for connection to a network (4); and
an application installed on or accessible from the client computer (2) and executable by the processor to cause the client computer (2) to operate in accordance with a method according to any one of claims 1 to 2.

4. A computer program comprising computer program code that when executed on a computer causes the computer to operate in accordance with a method according to any one of claims 1 to 2.

5. A computer readable medium carrying a computer program according to claim 4.

## Patentansprüche

1. Verfahren auf einem Client-Computer (2) zur Schaffung eines Tunnels für Netzwerknachrichten zwischen dem Client und einem Server (8) über ein Netzwerk (4), wobei das Verfahren Folgendes umfasst:
Prüfen (10) einer oder mehrerer Netzwerknachrichten, die von dem Client-Computer (2) gesendet werden,
Ermitteln (20) aus Informationen, die in den Netzwerknachrichten enthalten sind, ob die Netzwerknachricht über einen Proxy (6) gesendet wird,
wenn die Netzwerknachricht über einen Proxy (6) gesendet wird, Erfassen der Proxy-Informationen aus der Netzwerknachricht, und
Verwenden (30) der erfassten Proxy-Informationen, um den Tunnel vom Client (2) über den Proxy (6) zu erstellen.

2. Verfahren nach Anspruch 1, das ferner Folgendes umfasst: Erfassung von Proxy-Authentifizierungsdaten aus einer Netzwerknachricht und Verwendung der erfassten Proxy- Authentifizierungsdaten für die Erstellung eines Tunnels von dem Client (2) über den Proxy (6).

3. Client-Computer (2), der Folgendes umfasst:
einen Prozessor, eine Netzwerkschnittstelle zur Verbindung mit einem Netzwerk (4) und
eine Anwendung, die auf dem Client-Computer (2) installiert ist oder auf die von dem Client-Computer (2) aus zugegriffen werden kann, und die durch den Prozessor ausgeführt werden kann, um den Client-Computer (2) zu veranlassen, gemäß einem Verfahren nach einem der Ansprüche 1 bis 2 zu arbeiten.

4. Computerprogramm, das Computerprogrammcode umfasst, der bei Ausführung auf einem Computer den Computer veranlasst, gemäß einem Verfahren nach einem der Ansprüche 1 bis 2 zu arbeiten.

5. Computerlesbares Medium, das ein Computerprogramm nach Anspruch 4 enthält.

## Revendications

1. Procédé, au niveau d'un ordinateur client (2), permettant de créer un tunnel pour des communications réseau entre le client et un serveur (8) par le biais d'un réseau (4), le procédé comportant :
l'étape consistant à inspecter (10) une ou plusieurs communications réseau envoyées en provenance de l'ordinateur client (2) ;
l'étape consistant à déterminer (20) d'après des informations contenues dans la communication réseau si la communication réseau est envoyée par le biais d'un serveur mandataire (6) ;
si la communication réseau est envoyée par le biais d'un serveur mandataire (6), l'étape consistant à capturer les informations du serveur mandataire à partir de la communication réseau ; et
l'étape consistant à utiliser (30) les informations capturées du serveur mandataire pour créer le tunnel en provenance du client (2) par le biais du serveur mandataire (6).

2. Procédé selon la revendication 1, comportant par ailleurs l'étape consistant à capturer les justificatifs d'authentification du serveur mandataire d'après un message réseau et l'étape consistant à utiliser les justificatifs d'authentification capturés du serveur mandataire lors de la création d'un tunnel en provenance du client (2) par le biais du serveur mandataire (6).

3. Ordinateur client (2) comportant :
un processeur ; une interface réseau à des fins de connexion à un réseau (4) ; et
une application installée sur ou accessible en provenance de l'ordinateur client (2) et exécutable par le processeur pour amener l'ordinateur client (2) à fonctionner selon un procédé selon l'une quelconque des revendications 1 à 2.

4. Programme informatique comportant un code de programme informatique qui, quand il est exécuté sur un ordinateur, amène l'ordinateur à fonctionner selon un procédé selon l'une quelconque des revendications 1 à 2.

5. Support lisible par un ordinateur portant un programme informatique selon la revendication 4.
